# EUROPEAN PATENT APPLICATION

(11) **EP 1 987 982 A1**
(43) Date of publication of application: **05.11.2008**
(21) Application number: 07730335.2
(22) Date of filing: 20.02.2007
(51) Int. Cl.: B60N 2/42

(54) **MOVING SEAT FOR VEHICLES**

(30) Priority: 20.02.2006 ES 200600442 U
(71) Applicant: Vaivencar, S.L., 36201 Vigo, Pontevedra (ES)
(72) Inventor: VALVERDE FERNANDEZ, Javier, E-36201 Vigo (Pontevedra) (ES)
(74) Representative: Ungria Lopez, Javier
(86) International application number: PCT/ES2007/000094
(87) International publication number: WO 2007/096445

(57) **Abstract**

**Abstract**: The invention relates to a moving seat for vehicles, which is **characterised in that** it is mounted to a gimbal suspension support with one or two shafts, whereby the centre of gravity of the seat and the passenger is located below the suspension shafts. The invention also includes dampers and devise for blocking, delimiting or minimizing the sharpness of the movements.

## Description

### OBJECT OF THE INVENTION

The present invention as expressed by the title of this descriptive report refers to a moving seat for vehicles intended for the auto industry and which object is to provide the vehicle with a moving seat to decrease the fatigue and discomfort caused by the forces affecting the driver and/or passenger's bodies during speed shifts, tilt and path of travel, as well as providing greater safety conditions during possible accidental impacts.

### BACKGROUND OF THE INVENTION

Vehicle seats, from the first automobiles to modern vehicles, are assembled to the chassis of the vehicle in a fixed manner, so the movements of passenger and seat are the same as those of the vehicle, which causes fatigue and discomfort to the vehicle's occupants.

### DESCRIPTION OF THE INVENTION

In order to attain the objectives and avoid said inconveniencies, the present invention proposes a moving seat for vehicles characterized in that it is a seat that follows the movements of the passenger's gravity center, tilting conveniently into it and concentrating on the seat's base the static and dynamic forces of the whole set.

The seat is also characterized in that it is mounted on a mobile or gimbal support having one or two perpendicular shafts (forward-backwards, left-right), with the center of gravity of seat and passenger is located below the suspension shafts. It is additionally equipped with dampers and devices to block, delimit or minimize the sharpness of the movements.

Another characteristic of the invention is that it is mounted on a moving support equipped with hydraulic devices that move the seat responding to gravity center movement sensors.

The next section, which is an integrated part of this descriptive report, is intended to facilitate the understanding of the information it contains by including figures that are intended for illustration and not for limiting purposes of the object of the invention.

### BRIEF DESCRIPTION OF THE DRAWINGS

**Figure 1****. -** Shows a schematic plan view of a vehicle equipped with the moving seat for vehicles object of the present invention.
**Figure 2**. - Shows a lateral view of the same vehicle represented in Figure 1.
**Figure 3**. - Shows a front frontal view of the moving seat for vehicles object of the invention.
**Figure 4**. - Shows a rear frontal view of the moving seat for vehicles object of the invention.
**Figures 5 to 8****. -** Show different schematic views of the moving seat for vehicles object of the invention set in different positions that show the results of the present invention.
**Figures 9 to 11****. -** Show different schematic views of the moving seat for vehicles object of the invention showing a seat equipped with a gimbal suspension of one or two shafts.

### DESCRIPTION OF THE PREFERRED EMBODIMENT

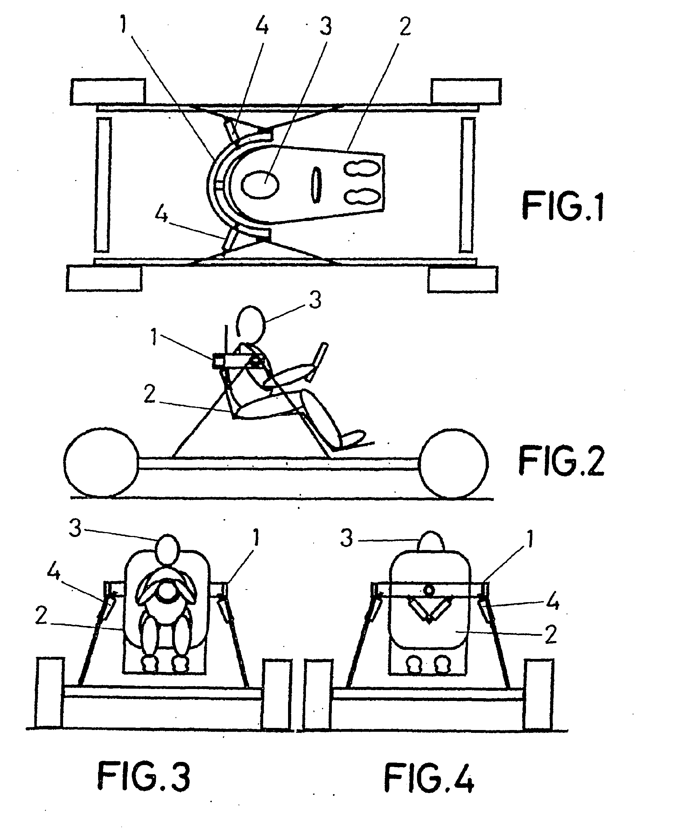

Considering the number sequence of the figures described in the previous section, the invention comprises a seat suspended on a gimbal suspension 1,1', two forward-backward 5, left-right 6 concentric circles or semicircles arranged at right angles to the shaft (figure 1) so the center of gravity of the seat 2 - passenger 3 set is located below the suspension shafts, allowing it to oscillate in response to the forces affecting it.

It is also provided with damper elements 4 to delimit or minimize the speed of said movements so the seat 2 - passenger 3 set oscillates with a rocking motion as it adjusts its center of gravity in response to the vehicle's movement.

Other embodiments of the present invention intended for the same function and achieving the same result may comprise the combination of technical, mechanical, electromechanical, hydraulic, pneumatic, computerized or other means. The combination of movement or force sensors and response devices to achieve the same results may be countless.

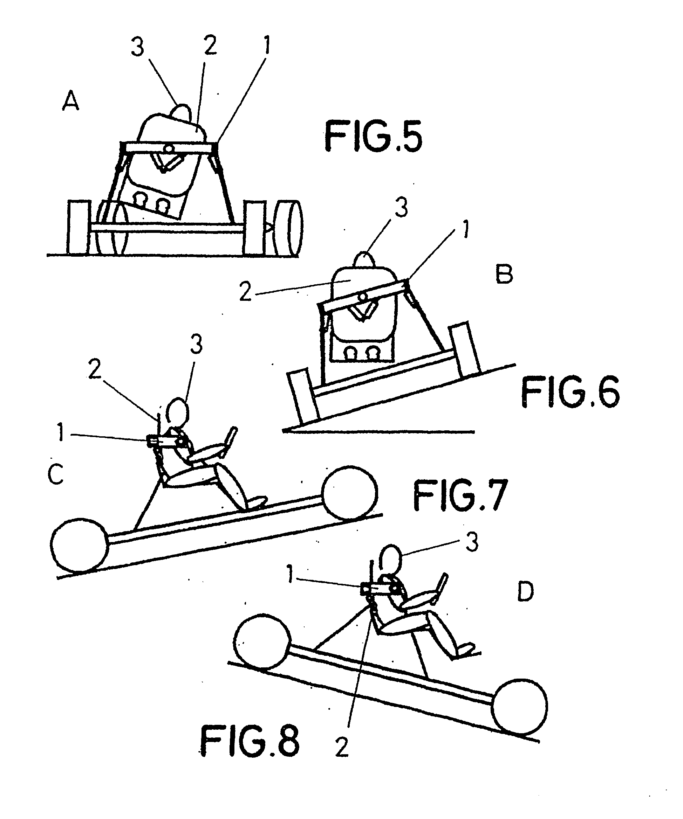

Figure 5 shows a rear view of a running vehicle describing a right curve on a leveled road. In this particular case the center of gravity moves to the left in response to the centrifugal force tilting the seat-passenger set.

Figure 6 shows also a rear view of the vehicle stopped on a banked road.

Figure 7 shows a side view of the vehicle going up hill.

Figure 8 shows also a side view of the vehicle going down hill.

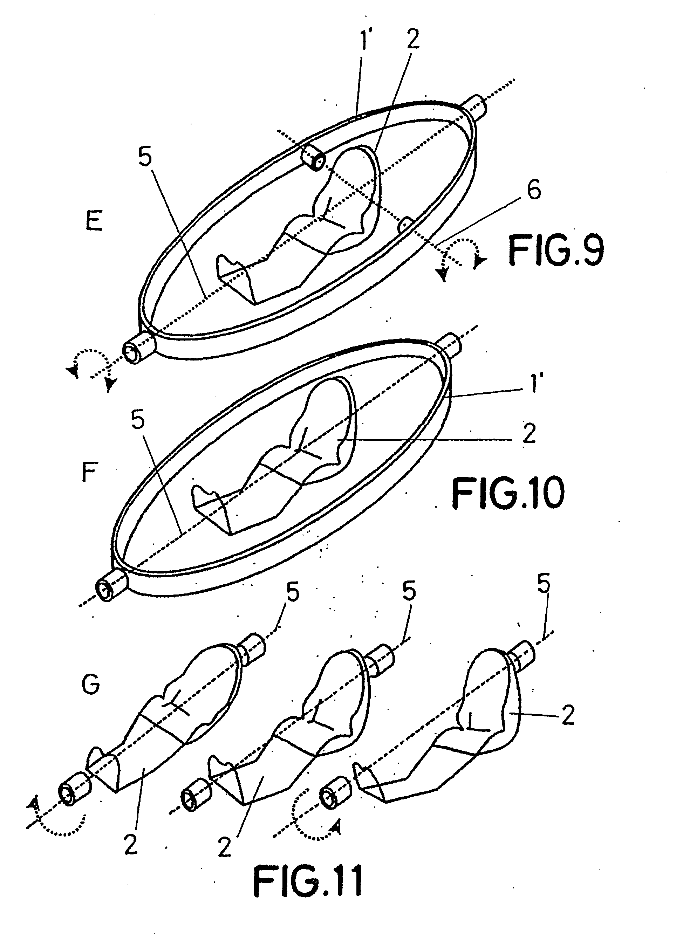

Figure 9 shows the seat inside a 2-shaft (forward-backwards, left-right) gimbal suspension assembly.

Figure 10 shows a seat inside a 1 longitudinal shaft (forward-backwards) 5 gimbal suspension assembly.

Lastly, Figure 11 shows the vehicle seat tilted to the left, in a centered position, and tilted to the right, assembled on a 1 transversal shaft (forward-backwards) 6 gimbal suspension.

## Claims

1. - Moving seat for vehicles **characterized in that** it is mounted on a moving assembly or gimbal suspension having one or two shafts (forward-backward, left-right), in which the center of gravity of the seat-passenger set is located below the suspension shafts and additionally equipped with dampers and devices to block, delimit or minimize the sharpness of movement.

2. - Moving seat for vehicles according to claim 1 (same function and results) **characterized in that** is mounted on a moving assembly equipped with hydraulic devices that move the seat in response to information sent by sensors that detect the movement of the center of gravity.
